# EUROPEAN PATENT SPECIFICATION

(11) **EP 2 842 740 B1**
(45) Date of publication and mention of the grant of the patent: **29.05.2019**
(21) Application number: 13781136.0
(22) Date of filing: 12.03.2013
(51) Int. Cl.: C09J 7/40, B32B 27/10, B32B 27/00, C08K 5/56, C09J 183/04, C08L 83/00, B32B 7/06, B32B 27/32, B32B 27/36

(54) **RELEASE SHEET, ADHESIVE SHEET, AND METHOD FOR MANUFACTURING ADHESIVE SHEET**
TRENNFOLIE, KLEBEFOLIE UND VERFAHREN ZUR HERSTELLUNG DER KLEBEFOLIE
FEUILLE ANTIADHÉSIVE, FEUILLE ADHÉSIVE ET PROCÉDÉ, DE FABRICATION DE FEUILLE ADHÉSIVE

(30) Priority: 27.04.2012 JP 2012103813
(43) Date of publication of application: 04.03.2015
(73) Proprietor: Lintec Corporation, Tokyo 173-0001 (JP)
(72) Inventor: TANAKA Atsuhiro, Tokyo 173-0001 (JP); TAKEMOTO Takashi, Tokyo 173-0001 (JP); NAKAMURA Kazuki, Tokyo 173-0001 (JP)
(74) Representative: J A Kemp
(86) International application number: PCT/JP2013/056821
(87) International publication number: WO 2013/161411

(56) References cited:
- EP-A1- 1 072 664
- EP-A1- 1 146 170
- WO-A1-00/34580
- WO-A1-2009/059299
- JP-A- H04 257 395
- JP-A- H11 228 920
- JP-A- H11 277 697
- JP-A- 2000 073 018
- JP-U- S59 153 341

## Description

### [Technical Field]

The present invention relates to a pressure sensitive adhesive sheet and a method for manufacturing the pressure sensitive adhesive sheet, and also relates to a release sheet that can be used for the pressure sensitive adhesive sheet.

### [Background Art]

In recent years, to protect a display device such as a liquid crystal display and an organic EL display in various electronic devices from breakage and scratch, a pressure sensitive adhesive sheet is widely used to be applied to the surface of such a display device. This type of pressure sensitive adhesive sheet may comprise a transparent base material film and a pressure sensitive adhesive layer. On the other hand, another type of pressure sensitive adhesive sheet may be applied as a product advertising medium (POP) or decoration for advertisement to window glass or display window of various shops. This type may comprise a transparent base material film with printing and a pressure sensitive adhesive layer.

As a pressure sensitive adhesive sheet as described above, a pressure sensitive adhesive sheet described in Patent Literature 1 is proposed, for example. In this pressure sensitive adhesive sheet, a certain silicone rubber is used as a pressure sensitive adhesive to constitute the pressure sensitive adhesive layer, and a release film formed of polyethylene terephthalate is used as a release material to be laminated on the pressure sensitive adhesive layer.

By using the above certain silicone rubber as the pressure sensitive adhesive, there can be obtained advantageous effects that: the interfacial adhesion property to the transparent base material film is excellent; removability to an adherend can be obtained thereby to allow repeatable application; and a release film without release treatment can be used.

### [Prior Art Literature]

### [Patent Literature]

[Patent Literature 1] JP2006-52384A

### [Summary of the Invention]

### [Problems to be solved by the Invention]

However, since the pressure sensitive adhesive sheet as described in Patent Literature 1 employs a smooth release film as the release material, blocking may occur between the smooth release film and the transparent base material film when the pressure sensitive adhesive sheet undergoes processing such as printing in a sheet-fed manner or in a roll-to-roll manner, and troubles may occur at the time of unreeling and feeding.

Furthermore, if the release film is transparent, then, when a plurality of pressure sensitive adhesive sheets after printing are stacked together, the printed parts are viewed as overlapping one another, so that the check for printing appearance and inspection of pressure sensitive adhesive sheets may be complicated.

To solve the above problems, it may be considered to use as the release material a release paper of which one surface is subjected to release treatment. Using a release paper as the release material allows smooth unreeling even when the above processing is performed. In addition, inspection of the printed pressure sensitive adhesive sheets may be easy because the release paper is not transparent. However, the release-treated surface of the release paper may have large irregularities due to paper fibers thereby to be a rough surface, so that the above irregularities are transferred to the pressure sensitive adhesive surface (surface to be in contact with an adherend) of the pressure sensitive adhesive layer which is in contact with the release-treated surface, and a so-called orange-peel surface may occur on the pressure sensitive adhesive surface of the pressure sensitive adhesive layer.

If such a pressure sensitive adhesive sheet having a pressure sensitive adhesive surface of the orange-peel surface as described above is applied to an adherend, air will readily come into spaces between the adherend and the pressure sensitive adhesive surface, causing disfigurement of the pressure sensitive adhesive sheet. In addition, the orange-peel surface of the pressure sensitive adhesive surface will appear on the front surface side of the pressure sensitive adhesive sheet, so that the printed parts and the transmission image through the non-printed parts may not be sharp.

It may also be considered to use as the release material a laminated paper obtained by laminating one surface of a paper base with resin. In such a release material, however, contraction stress due to resin will act at one side of the release material, and curling may thus occur.

The present invention has been made in consideration of such actual circumstances, and an object of the present invention is to provide a release sheet and a pressure sensitive adhesive sheet that are suitable for processing such as printing and can prevent an orange-peel surface from occurring on the pressure sensitive adhesive surface of the pressure sensitive adhesive sheet and are further suppressed from curling. Another object of the present invention is to provide a method for manufacturing the pressure sensitive adhesive sheet.

### [Means for solving the Problems]

To achieve the above objects, first, the present invention provides a release sheet suitable for being laminated with a pressure sensitive adhesive layer configured of a silicone-based pressure sensitive adhesive, wherein the release sheet is suitable for being released from the pressure sensitive adhesive layer when released, wherein the release sheet comprises: a paper base; a pigment coat layer formed on one side of the paper base; a first polyolefin layer formed on a side of the pigment coat layer opposite to the paper base; and a second polyolefin layer formed on the other side of the paper base, wherein a surface of the first polyolefin layer opposite to the pigment coat layer undergoes a highly smoothing process, such that a root-mean-square gradient of roughness curve at the surface of the first polyolefin layer opposite to the pigment coat layer is 0.014 µm or less, wherein the root-mean-square gradient of roughness curve is measured with a reference length of 2.5 mm from a roughness curve of a cutoff value of 2. 5 mm in accordance with ISO 4287: 1997 using a surface roughness tester,
and wherein the surface is suitable for being laminated directly on to the pressure sensitive adhesive layer.

According to the above invention (Invention 1), since the surface of the first polyolefin layer opposite to the pigment coat layer is highly smooth, and the pressure sensitive adhesive surface of the pressure sensitive adhesive layer laminated directly on that surface is also highly smooth. Therefore, an orange-peel surface can be prevented from occurring on the pressure sensitive adhesive surface from immediately after when the release sheet is released. Moreover, the surface of the second polyolefin layer opposite to the paper base (back surface of the release sheet) is a rough surface in general because the irregularities of the paper base are reflected thereon. Therefore, the sliding ability is effectively developed at the back surface, and the blocking is unlikely to occur, thus the release sheet is suitable for processing such as printing. Furthermore, both sides of the paper base are formed thereon with polyolefin layers, and the curling can thus be suppressed in the release sheet.

In the above invention (Invention 1), it is preferred that a surface of the second polyolefin layer opposite to the paper base has an Oken smoothness of 10,000 sec or less, wherein the Oken smoothness is measured in accordance with JIS P8155: 2010 using an Oken type air-permeability and smoothness tester.

In the above invention (Invention 1, 2), it is preferred that, within one minute after the pressure sensitive adhesive layer was released from the release sheet, a total value of degrees of image clarity is 370% or more at a surface of the pressure sensitive adhesive layer having been in contact with the release sheet, wherein the degrees of image clarity are measured with optical combs of 0.125 mm, 0.25 mm, 0.5 mm, 1.0 mm and 2.0 mm in accordance with JIS K7105.

In the above invention (Invention 1 to 2), it is preferred that the highly smoothing process is a calender process using a mirrored roll (Invention 3).

In the above invention (Invention 1 to 3), it is preferred that polyolefin resin that constitutes each of the first polyolefin layer and the second polyolefin layer is a low density polyethylene (Invention 4).

In the above invention (Invention 1 to 4), it is preferred that: the first polyolefin layer has a thickness (t1) of 10 to 50 µm; the second polyolefin layer has a thickness (t2) of 10 to 50 µm; and a ratio of the thickness (t1) of the first polyolefin layer to the thickness (t2) of the second polyolefin layer (t1/t2) is 0.5 to 2.0 (Invention 5).

Second, the present invention provides a pressure sensitive adhesive sheet comprising: a base material; a pressure sensitive adhesive layer configured of a silicone-based pressure sensitive adhesive; and the release sheet (Invention 1 to 5), wherein the pressure sensitive adhesive layer is laminated directly on the surface of the first polyolefin layer in the release sheet opposite to the pigment coat layer (Invention 6).

In the above invention (Invention 6), it is preferred that the silicone-based pressure sensitive adhesive comprises an addition reaction-type silicone pressure sensitive adhesive that contains an addition reaction-type silicone resin and a silicone resin, wherein the addition reaction-type silicone resin is obtainable from a first polydimethylsiloxane having at least two alkenyl groups in one molecule and a second polydimethylsiloxane having at least two hydrosilyl groups in one molecule (Invention 7).

In the above invention (Invention 7), it is preferred that a compounding ratio of the silicone resin is 1 to 30 mass parts relative to 100 mass parts of the addition reaction-type silicone resin (Invention 8).

It is preferred that the pressure sensitive adhesive sheet according to the above invention (Invention 6 to 8) is suitable for printing in a state of a pressure sensitive adhesive sheet having the release sheet (Invention **9**).

It is preferred that the pressure sensitive adhesive sheet according to the above invention (Invention 6 to 9) is suitable for sheet-fed processing in a state of a pressure sensitive adhesive sheet having the release sheet (Invention 10).

Third, the present invention provides a method for manufacturing the pressure sensitive adhesive sheet (Invention 6 to 10), the method comprising: coating one surface of the base material with a pressure sensitive adhesive material that is to constitute the pressure sensitive adhesive layer; hardening the applied pressure sensitive adhesive material to form the pressure sensitive adhesive layer; and laminating the release sheet and the pressure sensitive adhesive layer on each other so that the surface of the first polyolefin layer in the release sheet opposite to the pigment coat layer is in direct contact with the pressure sensitive adhesive layer (Invention 11).

### [Advantageous Effect of the Invention]

The release sheet and the pressure sensitive adhesive sheet according to the present invention are suitable for processing such as printing. Moreover, the pressure sensitive adhesive surface of the pressure sensitive adhesive layer is highly smooth, so that an orange-peel surface can be prevented from occurring on the pressure sensitive adhesive surface from immediately after when the release sheet is released. Furthermore, the release sheet and the pressure sensitive adhesive sheet according to the present invention are suppressed from curling.

### [Brief Description of Drawings]

FIG. 1 is a cross-sectional view of a release sheet according to an embodiment of the present invention.
FIG. 2 is a cross-sectional view of a pressure sensitive adhesive sheet according to an embodiment of the present invention.

### [Mode(s) for Carrying out the Invention]

Embodiments of the present invention will be described hereinafter.

### <Release sheet>

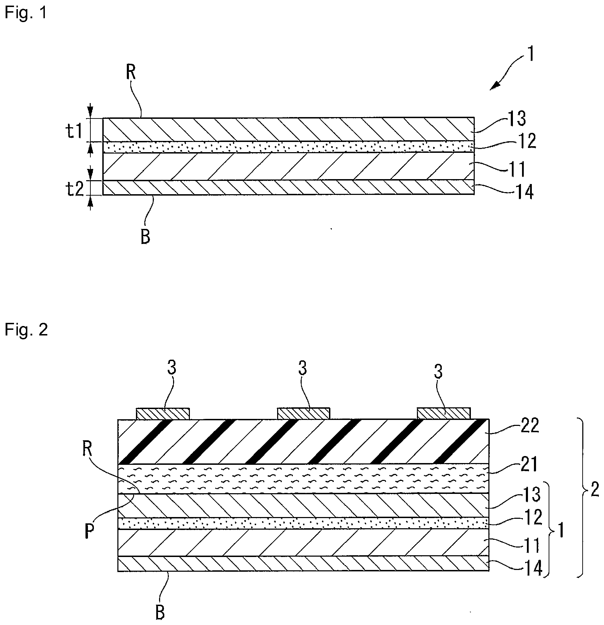

As shown in FIG. 1, a release sheet 1 according to the present embodiment is configured of a paper base 11, a pigment coat layer 12 formed on one side of the paper base 11 (upper side in FIG. 1), a first polyolefin layer 13 formed on a side of the pigment coat layer 12 opposite to the paper base 11 (upper side in FIG. 1), and a second polyolefin layer 14 formed on the other side of the paper base 11 (lower side in FIG. 1).

In the release sheet 1 according to the present embodiment, the surface of the first polyolefin layer 13 opposite to the pigment coat layer 12 (upper surface in FIG. 1) is a release surface R, on which a pressure sensitive adhesive layer is to be directly laminated. When the release sheet 1 is released, the release sheet 1 and the pressure sensitive adhesive layer are separated from each other at the release surface R.

As the paper base 11, for example, wood-free paper, kraft paper, glassine paper or other appropriate papers can be used, among which the wood-free paper is preferable. The wood-free paper has an advantage that the degree of curling due to environmental influence is small.

The basis weight of the paper base 11 may preferably be 50 to 200 g/m², and particularly preferably 60 to 120 g/m².

Since the paper base 11 is not transparent, even when a plurality of pressure sensitive adhesive sheets after printing are stacked together, the printed parts of the pressure sensitive adhesive sheets are not viewed as overlapping one another, so that the check for printing appearance and inspection of the pressure sensitive adhesive sheets may easily be performed.

The pigment coat layer 12 formed on the paper base 11 has a function to fill the irregularities on the paper base 11 due to paper fibers (function as filler) . Therefore, the surface roughness of the surface of the pigment coat layer 12 opposite to the paper base 11 is smaller than that of the surface of the paper base 11.

The pigment coat layer 12 may be formed by coating one surface of the paper base 11 with a coating liquid that contains pigment, binder and solvent, and if necessary further contains additives. Examples of the pigment include clay, titanium oxide, heavy calcium carbonate, light calcium carbonate, calcium sulfate, calcium acetate, zinc oxide, alumina, aluminum hydroxide, barium sulfate, plastic pigment, and synthetic silica. One type thereof may be solely used, or two or more types may be used in a form of mixture.

Among the above pigments, clay may particularly be preferable. Clay allows the paper base 11 to be effectively filled therewith. Examples of clay include kaolin, talc, bentonite, vermiculite, mica, isinglass, chlorite, "Kibushi" clay, "Gairome" clay, smectite, and halloysite. One type thereof may be solely used, or two or more types may be used in a form of mixture. Among the above clays, kaolin and/or talc may preferably be used because they allow the paper base 11 to be more effectively filled therewith.

Examples of the binder include: latexes such as styrene-butadiene latex, acrylic-based latex and vinyl acetate-based latex; starches such as simple starch, modified starch, oxidized starch, hydroxyethyl etherified starch and phosphoric acid esterified starch; cellulose derivatives such as carboxyl methyl cellulose and hydroxyethyl cellulose; polyvinyl alcohol; polyvinyl pyrrolidone; casein; and gelatin. One type thereof may be solely used, or two or more types may be used in a form of mixture.

Examples of the additives to be appropriately used include pigment dispersant, antifoam, foam inhibitor, viscosity adjuster, lubricant, water resistant agent, water retention agent, ultraviolet absorber, and colorant. Water and/or alcohol may ordinarily be used as the solvent.

Coating with the above coating liquid may be performed using a coater, such as bar coater, die coater, gravure coater, roll coater and blade coater, for example.

The dry coating mass of the pigment coat layer 12 may preferably be 5 to 40 g/m², and particularly preferably 10 to 30 g/m². The dry coating mass of the pigment coat layer 12 being within the above range allows the paper base 11 to be necessarily and sufficiently filled with the pigment coat layer 12.

A clay-coated paper may also be used. The clay-coated paper can be obtained by forming the pigment coat layer 12 on one surface of the paper base 11 in advance.

The first polyolefin layer 13 has a function to cover the irregularities on the surface of the pigment coat layer 12 at the side of the first polyolefin layer so that the release surface R of the release sheet 1 is smoothened. The second polyolefin layer 14 has a function to suppress the release sheet 1 from curling. That is, both surfaces of the paper base 11 are laminated with polyolefin layers thereby to balance the stresses caused at one side and at the other side of the release sheet 1, and the curling is thus unlikely to occur in the release sheet 1. Moreover, both surfaces of the paper base 11 are laminated with polyolefin layers thereby to avoid the water in the paper base 11 from readily moving outside, so that the release sheet 1 can be prevented from curling due to the water content varying. Furthermore, the second polyolefin layer 14 may also have a function, as necessary, to adjust the smoothness of the surface of the release sheet 1 opposite to the release surface R (back surface B, which corresponds to the surface of the second polyolefin layer 14 opposite to the paper base 11) to a desirable degree.

Examples of polyolefin resin, which constitutes each of the first polyolefin layer 13 and the second polyolefin layer 14, include polyethylene resin such as very low density polyethylene (VLDPE, density: 880 kg/m³ or more and less than 910 kg/m³), low density polyethylene (LDPE, density: 910 kg/m³ or more and less than 930 kg/m³), middle density polyethylene (MDPE, density: 930 kg/m³ or more and less than 942 kg/m³) and high density polyethylene (HDPE, density: 942 kg/m³ or more), polypropylene resin, polyethylene-polypropylene copolymer, olefin-based elastomer (TPO), cycloolefin resin, ethylene-vinyl acetate copolymer (EVA), ethylene-vinyl acetate-maleic anhydride copolymer, ethylene-(meth)acrylic acid copolymer, ethylene-(meth)acrylic acid ester copolymer, and ethylene-(meth)acrylic acid ester-maleic anhydride copolymer. One type thereof may be solely used, or two or more types may be used in a form of mixture. The polyolefin resin for the first polyolefin layer 13 and the polyolefin resin for the second polyolefin layer 14 may be or may not be the same. The "(meth)acrylic acid" as used in the present description means both acrylic acid and methacrylic acid. The same applies to other similar terms.

Among the above polyolefin resins, polyethylene resin may be preferable, and low density polyethylene may be particularly preferable. Polyethylene resin allows the release of the pressure sensitive adhesive layer formed of silicone-based pressure sensitive adhesive. Low density polyethylene resin allows easy release of the pressure sensitive adhesive layer formed of silicone-based pressure sensitive adhesive because the low density polyethylene resin has a low elastic modulus and requires a small peel force.

The thickness (t1) of the first polyolefin layer 13 may preferably be 10 to 15 µm, and particularly preferably 15 to 30 µm. The thickness (t1) of the first polyolefin layer 13 being 10 µm or more allows the surface of the pigment coat layer 12 at the side of the first polyolefin layer 13 to be sufficiently covered, and the release surface R of the release sheet 1 can therefore be smoothened to a desirable level. It is enough if the thickness (t1) of the first polyolefin layer 13 is 50 µm. If the thickness (t1) exceeds 50 µm, the release sheet 1 may unnecessarily be thick and bulky and lead to economic disadvantages.

The thickness (t2) of the second polyolefin layer 14 may preferably be 10 to 50 µm, and particularly preferably 15 to 25 µm. If the thickness (t2) of the second polyolefin layer 14 is less than 10 µm, then, when the thickness (t1) of the first polyolefin layer 13 is 50 µm, for example, the difference from the thickness (t1) of the first polyolefin layer 13 is large so that the release sheet 1 may not sufficiently be prevented from curling. The thickness (t2) of the second polyolefin layer 14 being 10 µm or more allows the roughness of the back surface B of the release sheet 1 to be adjusted to a desired degree. It is enough if the thickness (t2) of the second polyolefin layer 14 is 50 µm. If the thickness (t2) exceeds 50 µm, the release sheet 1 may unnecessarily be thick and bulky and lead to economic disadvantages.

The ratio of the thickness (t1) of the first polyolefin layer 13 to the thickness (t2) of the second polyolefin layer 14 (t1/t2) may preferably be 0.5 to 2.0, and particularly preferably 0.8 to 1.5. The ratio (t1/t2) of the both layers being within the above range allows to balance the stresses caused at one side and at the other side of the release sheet 1, and the release sheet 1 can therefore be efficiently prevented from curling. In addition, the smoothness of the surface of the first polyolefin layer 13 opposite to the pigment coat layer 12 (release surface R), and the smoothness of the second polyolefin layer 14 opposite to the paper base 11 (back surface B of the release sheet 1), can easily be within preferable ranges to be described later.

It is preferred that the first polyolefin layer 13 and the second polyolefin layer 14 are formed by extrusion lamination. Specifically, a T-die film forming machine or other appropriate machine may be used, which operates to: melt and knead polyolefin resin that constitutes the first polyolefin layer 13 and polyolefin resin that constitutes the second polyolefin layer 14; and, while moving the paper base 11 formed with the pigment coat layer 12 on one surface of the paper base 11, laminate the molten polyolefin resin for the first polyolefin layer 13 on the surface at the side of the pigment coat layer 12 by extrusion lamination and laminate the molten polyolefin for the second polyolefin layer 14 on the surface of the paper base 11 opposite to the pigment coat layer 12 by extrusion lamination.

Here, the surface of the first polyolefin layer 13 opposite to the pigment coat layer 12 (release surface R) undergoes a highly smoothing process. This allows the release surface R of the release sheet 1 to have a very high smoothness. The pressure sensitive adhesive surface of the pressure sensitive adhesive layer in direct contact with such a highly smooth release surface R of the release sheet 1 is also highly smooth from immediately after when released from the release sheet 1, and can be prevented from being an orange-peel surface.

Examples of the highly smoothing process to be employed include a calender process using a mirrored roll (including a super calender process) and a press process. It is preferred that such a highly smoothing process is performed in a series of steps including the above extrusion lamination.

A root-mean-square gradient of roughness curve at the surface of the first polyolefin layer 13 opposite to the pigment coat layer 12 (release surface R) is 0.014 µm or less, particularly preferably 0.012 µm or less, and further preferably 0.010 µm or less. This allows the pressure sensitive adhesive surface of the pressure sensitive adhesive layer laminated on that surface to be highly smooth, and the pressure sensitive adhesive surface can thus be prevented from being an orange-peel surface.

The root-mean-square gradient of roughness curve (RΔq) is a parameter that is obtained by averaging the square of the gradient at the irregularities within a microscopic area in the surface and taking the square root thereof. As the surface becomes smooth, the root-mean-square gradient of roughness curve takes a smaller value. The root-mean-square gradient of roughness curve is obtained in accordance with ISO 4287: 1997. In the present description, the root-mean-square gradient of roughness curve refers to a value that is measured with a reference length of 2.5 mm from a roughness curve of a cutoff value of 2.5 mm using a surface roughness tester (in the exemplary test, SURFTEST SV-3000 available from Mitutoyo Corporation).

On the other hand, the surface of the second polyolefin layer 14 opposite to the paper base 11 (back surface B of the release sheet 1) may be a rough surface as the irregularities of the paper base 11 are reflected thereon because the second polyolefin layer 14 is laminated directly on the paper base 11. Note, however, that when the roughness (smoothness) does not reach a desired degree, it is preferred that a mat processing is performed for the back surface B of the release sheet 1. The mat processing as used in the present description refers to a processing to physically roughen a surface.

Examples of the mat processing include a method of emboss processing and a method of sandblast processing, among which the method of emboss processing may be preferable, and a method of emboss processing using a mat roll is particularly preferable. The method of emboss processing using a mat roll can be performed in a series of steps including the above extrusion lamination. In this case, the mat roll can be used as a cooling roll.

As described above, since the back surface B of the release sheet 1 is a rough surface, when the pressure sensitive adhesive sheet provided with the release sheet 1 undergoes printing such as sheet-fed offset printing and screen printing or processing such as punching, in particular undergoes processing in a sheet-fed manner, air comes into recessed spaces at the rough surcease of the back surface B of the release sheet 1 and the contact area with the base material of another pressure sensitive adhesive sheet becomes small so that the sliding ability is effectively developed at the back surface B, and multiple feeding of the pressure sensitive adhesive sheets (feeding of plural sheets in a overlapped state) and jamming (jamming at a feeding path) can thereby be suppressed. This allows the pressure sensitive adhesive sheets to be accurately fed when the sheets undergo printing in a sheet-fed manner, and printing can be performed with accuracy and with sharp images. Also when the pressure sensitive adhesive sheet undergoes processing in a roll-to-roll manner, blocking is unlikely to occur between the back surface B of the release sheet 1, which is a rough surface, and the base material, and smooth unreeling of the pressure sensitive adhesive sheet can be performed. Thus, the release sheet 1 and the pressure sensitive adhesive sheet provided with the release sheet 1 are highly suitable for processing such as printing and punching.

An Oken smoothness of the surface of the second polyolefin layer 14 opposite to the paper base 11 may preferably be 10,000 sec or less, particularly preferably 5,000 sec or less, and further preferably 1,000 sec or less. This allows the back surface B of the release sheet 1 to be a rough surface suitable for processing such as printing and punching, and the feeding and unreeling can be smoothly performed.

The Oken smoothness as used herein refers to the number of seconds required for a predetermined amount of compressed air to leak through a gap between a measurement ring and a test piece when the test piece is pressed against the measurement ring with a predetermined pressure. A smaller value of the Oken smoothness represents a larger roughness, under which the multiple feeding and jamming are unlikely to occur when the pressure sensitive adhesive sheet is fed. The Oken smoothness is measured in accordance with JIS P8155: 2010. In the present description, the Oken smoothness refers to a value that is measured using an Oken type air-permeability and smoothness tester (in the exemplary test, KY6 available from ASAHI SEIKO CO., LTD).

The total thickness of the release sheet 1 may preferably be 100 to 200 µm, and particularly preferably 140 to 180 µm. The total thickness being within such a range allows the release sheet 1 with the above structure to have a desirable stiffness (rigidity) and therefore have excellent processing suitability.

In the release sheet 1 according to the present embodiment, the paper base 11 may be colored with a desirable color, and/or the surface of the paper base 11 at the side of the second polyolefin layer 14 may undergo desirable printing. In addition or alternatively, the first polyolefin layer 13 and/or the second polyolefin layer 14 may be colored with a desirable color.

The color for coloring is not particularly limited, but the color of the release sheet 1 may preferably be white in consideration of correction and appearance check of the printing on the pressure sensitive adhesive sheet, or the like. Examples of index for whiteness include the Hunter whiteness (brightness by Hunter) provided by JIS P8123. This Hunter whiteness can be measured using a Hunter whiteness meter (in the examples, Hunter whiteness tester D-type available from Toyo Seiki Seisaku-sho, Ltd. was used). Specifically, it is preferred that the white release sheet 1 has a Hunter whiteness of 70% to 90%. This allows the above works to be easily performed.

### <Pressure sensitive adhesive sheet>

As shown in FIG. 2, a pressure sensitive adhesive sheet 2 according to the present embodiment is configured of: the previously described release sheet 1; a pressure sensitive adhesive layer 21 that is laminated directly on the surface of the first polyolefin layer 13 in the release sheet 1 opposite to the pigment coat layer 12, i.e., laminated directly on the release surface R; and a base material 22 that is laminated on the surface of the pressure sensitive adhesive layer 21 opposite to the release sheet 1 (upper side in FIG. 2).

This pressure sensitive adhesive sheet 2 may undergo processing such as printing and punching in a state of having the release sheet 1. When the pressure sensitive adhesive sheet 2 undergoes printing, as shown in FIG. 2, a printed layer 3 may be formed on the surface of the base material 22 opposite to the pressure sensitive adhesive layer 21. When the pressure sensitive adhesive sheet 2 is used, the release sheet 1 is released from the pressure sensitive adhesive layer 21 (or the laminated body of the pressure sensitive adhesive layer 21 and the base material 22 (and the printed layer 3) is released from the release sheet 1), and an exposed pressure sensitive adhesive surface P of the pressure sensitive adhesive layer 21 is applied to an adherend.

The base material 22 is not particularly restricted, and any conventionally known one may be appropriately selected to the use. Examples of such a base material 22 include a resin film, a metal film, a resin film on which a metal is deposited by vapor deposition, and a laminated body thereof.

Examples of the resin film include films formed of resin, such as polyethylene, polypropylene or other polyolefin, polyethylene terephthalate, polybutylene terephthalate, polyethylene naphthalate or other polyester, polyvinyl chloride, polystyrene, polyurethane, polycarbonate, polyamide, polyimide, polyetherimide, poly(meth)acrylic ester, polybutene, polybutadiene, polymethylpentene, acrylic urethane, ethylene-vinyl acetate copolymer, ethylene (meth)acrylic acid copolymer, ethylene (meth)acrylic ester copolymer, ABS resin, ionomer resin and various thermoplastic elastomers, foamed films, laminated films thereof, and synthesized papers.

The resin film may be or may not be transparent, or may be translucent. The resin film may be a stretched film or a non-stretched film, or a film formed of process material using a casting method or the like. The resin film may be a film that contains various additives, such as inorganic filler, organic filler and ultraviolet absorber.

Among the above resin films, a polyethylene terephthalate (PET) film may be particularly preferable as the base material 22 of the pressure sensitive adhesive sheet 2 according to the present embodiment. The PET film may be a transparent PET film, or a foamed PET film, or a colored PET film.

One surface or both surfaces of the above resin film may be subjected to surface treatment such as using oxidation method and roughening method. Such surface treatment may improve the interfacial adhesion property with the printed layer 3 provided on the surface of the resin film and/or with the pressure sensitive adhesive layer 21 laminated on the resin film. Examples of the above oxidation method include corona discharge treatment, plasma discharge treatment, chromium oxidation treatment (wet type), flame treatment, hot-air treatment, ozone exposure treatment, and ultraviolet irradiation treatment. Examples of the roughening method include a sandblast method and a thermal spraying method. These surface treatment methods may be appropriately selected depending on the type of the resin film, but the corona discharge treatment method may preferably be used in view of the effect and the operability in general.

A coating layer for printing may be formed on the surface of the above resin film opposite to the pressure sensitive adhesive layer 21 in order to improve the interfacial adhesion property with the printed layer 3. Printing may also be performed for the surface of the resin film at the side of the pressure sensitive adhesive layer 21. In this case, a coating layer for printing may be formed on that surface. If printing is performed for the surface of the resin film at the side of the pressure sensitive adhesive layer 21 (back printing), then, when the pressure sensitive adhesive sheet 2 is applied to a transparent adherend, the printing can be viewed from the side of the adherend.

Examples of metal film available as the base material 22 include aluminum foil and copper foil. Examples of metal to be deposited on the resin film by vapor deposition include aluminum and copper.

The thickness of the base material 22 is not particularly limited, but may ordinarily be 10 to 300 µm, and preferably 20 to 150 µm.

The pressure sensitive adhesive that constitutes the pressure sensitive adhesive layer 21 is a silicone-based pressure sensitive adhesive. The silicone-based pressure sensitive adhesive can have a relatively reduced peel force, so that it may easily be released from an adherend, and an adhesive residue on the adherend can be very little. Therefore, the pressure sensitive adhesive sheet 2 having the pressure sensitive adhesive layer 21 formed of such a silicone-based pressure sensitive adhesive can have an excellent removability.

The silicone-based pressure sensitive adhesive that constitutes the pressure sensitive adhesive layer 21 may preferably be an addition reaction-type silicone pressure sensitive adhesive that contains an addition reaction-type silicone resin and a silicone resin, wherein the addition reaction-type silicone resin is obtained from a first polydimethylsiloxane having at least two alkenyl groups in one molecule and a second polydimethylsiloxane having at least two hydrosilyl groups in one molecule.

Examples of the alkenyl group contained in the first polydimethylsiloxane include a monovalent hydrocarbon group, such as vinyl group, allyl group, propenyl group, butenyl group, pentenyl group, hexenyl group, heptenyl group and octenyl group, among which the vinyl group may particularly be preferable.

The content of the alkenyl group in the first polydimethylsiloxane (the fraction of the number of alkenyl groups to the number of siloxane bonds) may preferably be 0.01 to 10 mol%, and particularly preferably 0.1 to 5 mol%. The alkenyl groups may preferably be located at both ends of the molecular chain, but at least a part of the alkenyl groups may be located at one or more side chains. The polymerization degree of the first polydimethylsiloxane (the number of siloxane bonds) may preferably be 200 to 5,000, and particularly preferably 500 to 3,000. The content of the hydrosilyl group in the second polydimethylsiloxane may preferably be 2 to 300 groups, and particularly preferably 4 to 200, in one molecule. The polymerization degree of the second polydimethylsiloxane may preferably be 50 to 2,000, and particularly preferably 100 to 1,500. The compounding ratio of the second polydimethylsiloxane to 100 mass parts of the first polydimethylsiloxane may preferably be 0.01 to 20 mass parts, and particularly preferably 0.1 to 10 mass parts. The content of each functional group and the compounding ratio of the second polydimethylsiloxane to the first polydimethylsiloxane being within the above ranges allows the addition reaction between the first polydimethylsiloxane and the second polydimethylsiloxane to smoothly progress, and the silicone-based pressure sensitive adhesive having the previously described characteristics can thereby be obtained.

It is preferred that the first polydimethylsiloxane contains no hydrosilyl group and the second polydimethylsiloxane contains no alkenyl group.

The weight-average molecular weight of the first polydimethylsiloxane may preferably be 20,000 to 1,300,000, and more preferably 300,000 to 1,200,000. The weight-average molecular weight of the second polydimethylsiloxane may preferably be 300 to 1,400, and more preferably 500 to 1,200. The weight-average molecular weight as used in the present description refers to a converted value in terms of polystyrene measured by using a gel permeation chromatography (GPC) method.

MQ resin may be used as the silicone resin, for example. The MQ resin is configured of M-unit which is monofunctional siloxane unit [(CH₃)₃SiO_{1/2}] and Q-unit which is tetrafunctional siloxane unit [SiO_{4/2}]. Molar ratio of M-unit/Q-unit may preferably be 0.6 to 1.7. This silicone resin has a function to impart the pressure sensitive adhesion property to the silicone-based pressure sensitive adhesive.

The compounding ratio of the silicone resin to 100 mass parts of the addition reaction-type silicone resin may preferably be 1 to 30 mass parts, particularly preferably 3 to 20 mass parts, and further preferably 5 to 15 mass parts. The compounding ratio of the silicone resin being within such a range allows the release property of the obtained pressure sensitive adhesive to be adjusted within a desirable range. In other words, the obtained pressure sensitive adhesive can be released from the release surface R of the release sheet 1 with a preferable peel force. Moreover, the obtained pressure sensitive adhesive may easily be released from an adherend, and an adhesive residue on the adherend can be very little.

It is preferred that the above addition reaction-type silicone pressure sensitive adhesive contains a catalyst. The catalyst is not particularly limited as long as it can harden the above addition reaction-type silicone resin (due to the addition reaction between the first polydimethylsiloxane and the second polydimethylsiloxane), but a platinum-group metal-based compound may be preferable. Examples of the platinum-group metal-based compound include fine particle-like platinum, fine particle-like platinum adsorbed on carbon powder carrier, chloroplatinic acid, alcohol modified chloroplatinic acid, olefin complex of chloroplatinic acid, palladium, and rhodium. Such a catalyst being contained allows the hardening reaction of the addition reaction-type silicone resin to more efficiently progress.

The compounding ratio of the catalyst to 100 mass parts of the above addition reaction-type silicone resin may be such that the platinum content is preferably 0.0001 to 0.1 mass parts, and particularly preferably 0.001 to 0.01 mass parts.

The above addition reaction-type silicone pressure sensitive adhesive may contain various additives, such as reaction inhibitor and adhesion improving agent, in addition to the above components.

The thickness of the pressure sensitive adhesive layer 21 may preferably be 1 to 100 µm in general, particularly preferably 3 to 30 µm, and further preferably 5 to 15 µm.

The pressure sensitive adhesive layer 21 can be formed by coating one surface of the base material 22 with a coating liquid that contains pressure sensitive adhesive material to constitute the silicone-based pressure sensitive adhesive and a desired diluent and thereafter drying and hardening the coating liquid. The coating may be performed using a coater, such as bar coater, die coater, gravure coater, roll coater and knife coater, for example.

The above diluent is not particularly restricted, and various types may be used. Examples thereof to be used include hydrocarbon compounds, such as toluene, hexane and heptane, as well as acetone, ethyl acetate, methyl ethyl ketone, methyl isobutyl ketone, and mixture thereof.

When the silicone-based pressure sensitive adhesive is the above addition reaction-type silicone pressure sensitive adhesive, it is preferred that the coated pressure sensitive adhesive material is thermally hardened. In this case, the heating temperature may preferably be 80°C to 180°C, and the heating time may preferably be about 10 to 90 seconds.

After the pressure sensitive adhesive layer 21 is formed on one surface of the base material 22 as described above, the release sheet 1 and the pressure sensitive adhesive layer 21 are laminated on each other so that the above release surface R of the release sheet 1 is in direct contact with the pressure sensitive adhesive layer 21, and the pressure sensitive adhesive sheet 2 can thus be obtained.

The pressure sensitive adhesive sheet 2 according to the present embodiment can undergo printing such as sheet-fed offset printing and screen printing or processing such as punching, or undergo processing in a sheet-fed manner or in a roll-to-roll manner, in a state of having the release sheet 1. As previously described, since the back surface B of the release sheet 1 is a rough surface, when the above processing is performed, air comes into recessed spaces at the rough surface of the back surface B of the release sheet 1 and the contact area with the base material 22 becomes small so that the sliding ability is effectively developed at the back surface B, and multiple feeding of the pressure sensitive adhesive sheets 2 and jamming can be suppressed. This allows the pressure sensitive adhesive sheets 2 to be accurately fed when the sheets undergo printing in a sheet-fed manner, and printing can be performed with accuracy and with sharp images. Also when the pressure sensitive adhesive sheet 2 undergoes processing in a roll-to-roll manner, blocking is unlikely to occur between the back surface B of the release sheet 1, which is a rough surface, and the base material 22, and smooth unreeling of the pressure sensitive adhesive sheet 2 can be performed. Thus, the pressure sensitive adhesive sheet 2 according to the present embodiment is highly suitable for processing such as printing and punching.

Here, the release surface R of the release sheet 1 has a high smoothness. Therefore, the pressure sensitive adhesive surface P of the pressure sensitive adhesive layer 21 in direct contact with the release surface R is also highly smooth, and can be prevented from being an orange-peel surface from immediately after when the release sheet 1 is released. When the pressure sensitive adhesive sheet 2 having such a pressure sensitive adhesive layer 21 is applied to an adherend, air may not come into spaces between the adherend and the pressure sensitive adhesive surface P, thus not causing disfigurement of the pressure sensitive adhesive sheet 2 from immediately after the application. In addition, according to the highly smooth pressure sensitive adhesive surface P, the printed parts of the pressure sensitive adhesive sheet 2 and the transmission image through the non-printed parts may be sharp.

With regard to the smoothness of the pressure sensitive adhesive surface P of the pressure sensitive adhesive layer 21, specifically, a total value of degrees of image clarity may preferably be 370% or more, particularly preferably 400% or more, and further preferably 450% or more, at the pressure sensitive adhesive surface P of the pressure sensitive adhesive layer 21 within one minute after the pressure sensitive adhesive layer 21 was released from the release sheet 1, wherein the degrees of image clarity are measured with optical combs having comb widths of 0.125 mm, 0.25 mm, 0.5 mm, 1.0 mm and 2.0 mm. In addition, the degree of image clarity with the comb width of 0.125 may preferably be 70% or more, and particularly preferably 75% or more.

Here, the degree of image clarity is obtained by measuring an amount of light of a parallel optical beam transmitting through a test piece, via an optical comb having transmission parts and light blocking parts. As the widths of the transmission parts and the light blocking parts (comb widths) in the optical comb are reduced, a decree of image clarity of a fine image is represented. The degree of image clarity may be measured in accordance with JIS K7374: 2000. In the present description, the degree of image clarity refers to a value that is measured using an image clarity meter (in the exemplary test, ICM-1DP available from Suga Test Instruments Co., Ltd).

The above degree of image clarity is a value that is measured "within one minute after the pressure sensitive adhesive layer 21 was released from the release sheet 1." If the degree of image clarity of the pressure sensitive adhesive surface P within one minute after it was released from the release sheet 1 is within the above range, air may not come into spaces due to an orange-peel surface from immediately after the application, thus not causing disfigurement, and a sharp printed image can be displayed.

In the pressure sensitive adhesive sheet 2 according to the present embodiment, the peel force in accordance with ISO 8510-2: 1990 when the release sheet 1 is released from the pressure sensitive adhesive layer 21 may preferably be 10 to 500 mN/50 mm, and particularly preferably 20 to 100 mN/50 mm. The peel force being within the above range allows the release sheet 1 to be easily released.

The above release sheet 1 is suppressed from curling because the first polyolefin layer 13 is formed on one side of the paper base 11 and the second polyolefin layer 14 is formed on the other side. Therefore, the pressure sensitive adhesive sheet 2 according to the present embodiment is also suppressed from curling.

The embodiments heretofore explained are described to facilitate understanding of the present invention and are not described to limit the present invention. Therefore, it is intended that the elements disclosed in the above embodiments include all design changes and equivalents to fall within the technical scope of the present invention.

For example, in the release sheet 1, one or more additional layers may be provided between the pigment coat layer 12 and the first polyolefin layer 13 and/or between the paper base 11 and the second polyolefin layer 14. Moreover, in the pressure sensitive adhesive sheet 2, one or more additional layers may be provided between the base material 22 and the pressure sensitive adhesive layer 21 and/or on the surface of the base material 22 opposite to the pressure sensitive adhesive layer 21.

### [Examples]

The present invention will hereinafter be described further specifically with reference to examples, etc, but the scope of the present invention is not limited to these examples, etc.

### <Production Example 1>

### (1) Production of silicone-based pressure sensitive adhesive (a)

A silicone-based pressure sensitive adhesive (a) (toluene solution) was obtained by mixing 100 mass parts of linear chain-like dimethylpolysiloxane blocked by dimethylvinylsiloxy groups at both ends (polymerization degree of 1,000), 3 mass parts of methylhydrogenpolysiloxane blocked by trimethylsiloxy groups at both ends (40 hydroxyl groups in one molecule), 0.5 mass parts of toluene solution of complex of chloroplatinic acid and divinyltetramethyldisiloxane (platinum content of 0.4 mass%), and 10 mass parts of MQ resin (M-unit/Q-unit=0.85) as silicone resin.

### (2) Production of silicone-based pressure sensitive adhesive (b)

A silicone-based pressure sensitive adhesive (b) was produced like the silicone-based pressure sensitive adhesive (a) except for changing the compounding amount of the silicone resin in the silicone-based pressure sensitive adhesive (a) to 20 mass parts.

### (3) Production of silicone-based pressure sensitive adhesive (c)

A silicone-based pressure sensitive adhesive (c) was produced like the silicone-based pressure sensitive adhesive (a) except for changing the compounding amount of the silicone resin in the silicone-based pressure sensitive adhesive (a) to 100 mass parts.

### <Production Example 2>

### (1) Production of release sheet (A)

### (i) Preparation of coating liquid for pigment coat layer

A coating liquid for pigment coat layer (solid content: 50 mass%) was obtained by dispersing 80 mass parts of kaolin, 20 mass parts of heavy calcium carbonate, 10 mass parts of styrene-butadiene copolymer and 5 mass parts of starch in water and mixing them.

### (ii) Formation of pigment coat layer

One surface of a paper base comprising a wood-free paper having a basis weight of 80 g/m² was coated with the above coating liquid for pigment coat layer using a gravure coater so that the amount of coating after drying would be 20 g/m² and, after the drying, caused to pass through super calender rolls thereby to form a pigment coat. The root-mean-square gradient of roughness curve at the surface of the paper base was 0.206 µm (measuring method, etc. will be described later).

### (iii) Formation of second polyolefin layer

The surface of the paper base opposite to the formed pigment coat layer was laminated by melt extrusion with low density polyethylene (melt mass flow rate measured in accordance with ISO 1872-1: 1993: 4.5 g/10 min, density: 923 kg/m³) so that the thickness would be 20 µm, and then continuously from the above operation, subjected to mat processing thereby to form a second polyolefin layer. The mat processing was performed using a cooling roll (mat roll) with its surface roughened and a pressing roll so that the low density polyethylene would be caused to pass through therebetween while contacting with the mat roll. The roughness of the surface of the cooling roll was adjusted so that the Oken smoothness of the second polyolefin layer would be 490 sec.

### (iv) Formation of first polyolefin layer

The surface of the pigment coat layer (opposite side to the paper base) was laminated by melt extrusion with low density polyethylene as same as the material for the second polyolefin layer so that the thickness would be 25 µm, and then continuously from the above operation, subjected to super calender processing thereby to form a first polyolefin layer. The super calender processing was performed using a cooling roll (mirrored roll) with its surface mirrored and a pressing roll so that the first polyolefin layer would be caused to pass through therebetween while contacting with the mirrored roll. In this way, a release sheet (A) was produced.

The Hunter whiteness of the pigment coat layer of the release sheet (A) was 78.2 when measured in accordance with JIS P8123 using a Hunter whiteness tester D-type available from Toyo Seiki Seisaku-sho, Ltd.

### (2) Production of release sheet (B)

A release sheet (B) was produced like the release sheet (A) except for forming the first polyolefin layer directly on one surface of the paper base (the surface opposite to the second polyolefin layer) without forming a pigment coat layer.

### (3) Production of release sheet (C)

A release sheet (C) was produced like the release sheet (A) except for not forming a first polyolefin layer.

### <Example 1>

One surface of a polyethylene terephthalate film as the base material having a thickness of 50 µm was coated with the toluene solution of the silicone-based pressure sensitive adhesive (a) using a knife coater, and drying was performed to form a pressure sensitive adhesive layer having a thickness of 15 µm. The release sheet (A) was applied to the surface of this pressure sensitive adhesive layer so that the first polyolefin layer would be in contact with the pressure sensitive adhesive layer, and a pressure sensitive adhesive sheet was thus manufactured.

### <Example 2>

A pressure sensitive adhesive sheet was manufactured like in Example 1 except for substituting the silicone-based pressure sensitive adhesive (a) with the silicone-based pressure sensitive adhesive (b).

### <Example 3>

A pressure sensitive adhesive sheet was manufactured like in Example 1 except for substituting the silicone-based pressure sensitive adhesive (a) with the silicone-based pressure sensitive adhesive (c).

### <Comparative Example 1>

A pressure sensitive adhesive sheet was manufactured like in Example 1 except for substituting the release sheet (A) with the release sheet (B).

### <Comparative Example 2>

A pressure sensitive adhesive sheet was manufactured, like in Example 1, by forming a pressure sensitive adhesive layer on one surface of the base material and applying the release sheet (C) to the surface of the pressure sensitive adhesive layer so that the pigment coat layer would be in contact with the pressure sensitive adhesive layer.

### <Exemplary Test 1>

The root-mean-square gradient of roughness curve at the release surface of each release sheet (the exposed surface of the first polyolefin layer in the release sheets (A) and (B) and the exposed surface of the pigment coat layer in the release sheet (C)) used in the examples and the comparative examples was measured with a reference length of 2.5 mm from a roughness curve of a cutoff value of 2.5 mm in accordance with ISO 4287: 1997 using a surface roughness tester (SURFTEST SV-3000 available from Mitutoyo Corporation). Results are listed in Table 1.

### <Exemplary Test 2>

The Oken smoothness at the back surface of each release sheet (the exposed surface of the second polyolefin layer) used in the examples and the comparative examples was measured in accordance with JIS P8155: 2010 using an Oken type air-permeability and smoothness tester (KY6 available from ASAHI SEIKO CO., LTD). Results are listed in Table 1.

### <Exemplary Test 3>

With regard to the pressure sensitive adhesive surface of the pressure sensitive adhesive layer within one minute after the release sheet was released from the pressure sensitive adhesive layer of the pressure sensitive adhesive sheet produced in each of the examples and the comparative examples, the degree of image clarity was measured in accordance with JIS K7374: 2000 using an image clarity meter (ICM-1DP available from Suga Test Instruments Co., Ltd). The comb widths of the optical combs in the image clarity meter used were 0.125 mm, 0.25 mm, 0.5 mm, 1.0 mm and 2.0 mm. Results are listed in Table 1.

### <Exemplary Test 4>

The pressure sensitive adhesive sheet manufactured in each of the examples and the comparative examples was cut into a test piece of 250 mm×50 mm. The laminated body of the base material and the pressure sensitive adhesive layer of the obtained test piece was fixed to a tester (Tensilon, available from ORIENTEC Co., LTD), and a force when the release sheet was peeled off with a tension rate of 300 mm/min in a direction of 180° was measured as a peel force (mN/50 mm) in accordance with ISO 8510-2: 1990. Results are listed in Table 1.

**[Table 1]**

| | Silicone-based pressure sensitive adhesive | Release sheet | Peel force (mN/50 mm) | Root-mean-square gradient (µm) | Oken smoothness (sec) | Degree of image clarity (%) | | | | | |
|---|---|---|---|---|---|---|---|---|---|---|---|
| | | | | Release surface | Back surface | 2.0 mm | 1.0 mm | 0.5 mm | 0.25 mm | 0.125 mm | Total |
| Example 1 | (a) | (A) | 60 | 0.009 | 490 | 97.9 | 96.7 | 94.8 | 86.6 | 77.7 | 453.7 |
| Example 2 | (b) | (A) | 200 | 0.009 | 490 | 97.5 | 96.1 | 93.9 | 85.2 | 76.2 | 448.9 |
| Example 3 | (c) | (A) | 1000 | 0.009 | 490 | 97 | 95.8 | 90.1 | 79.5 | 73.2 | 435.6 |
| Comparative Example 1 | (a) | (B) | 60 | 0.015 | 490 | 96 | 92.2 | 79.7 | 53.4 | 38.3 | 359.6 |
| Comparative Example 2 | (a) | (C) | 60 | 0.049 | 490 | 89.9 | 77 | 66 | 63.9 | 64.6 | 361.2 |

As apparent from Table 1, in the pressure sensitive adhesive sheets manufactured according to the examples, the pressure sensitive adhesive surface of the pressure sensitive adhesive layer was highly smooth from immediately after when the release sheet was released, and the back surface of the release sheet was a rough surface suitable for processing such as printing.

### [Industrial Applicability]

The pressure sensitive adhesive sheet according to the present invention can be suitably used as a pressure sensitive adhesive sheet for printing such as sheet-fed offset printing and screen printing, in particular as a pressure sensitive adhesive sheet for printing in a sheet-fed manner. The release sheet according to the present invention can be suitably used as a release sheet for such a pressure sensitive adhesive sheet.

### [Description of Reference Numerals]

- 1: Release sheet
11... Paper base
12... Pigment coat layer
13... First polyolefin layer
14... Second polyolefin layer
- 2: Pressure sensitive adhesive sheet
21... Pressure sensitive adhesive layer
22... Base material
- 3: Printed layer
- R: Release surface
- B: Back surface (of release sheet)
- P: Pressure sensitive adhesive surface

## Claims

1. A release sheet suitable for being laminated with a pressure sensitive adhesive layer configured of a silicone-based pressure sensitive adhesive, wherein the release sheet is suitable for being released from the pressure sensitive adhesive layer when released, wherein the release sheet comprises:
a paper base;
a pigment coat layer formed on one side of the paper base;
a first polyolefin layer formed on a side of the pigment coat layer opposite to the paper base; and
a second polyolefin layer formed on the other side of the paper base,
wherein a surface of the first polyolefin layer opposite to the pigment coat layer undergoes a highly smoothing process, such that a root-mean-square gradient of roughness curve at the surface of the first polyolefin layer opposite to the pigment coat layer is 0.014 µm or less, wherein the root-mean-square gradient of roughness curve is measured with a reference length of 2.5 mm from a roughness curve of a cutoff value of 2.5 mm in accordance with ISO 4287: 1997 using a surface roughness tester,
and wherein the surface is suitable for being laminated directly on to the pressure sensitive adhesive layer.

2. The release sheet as recited in claim 1, wherein a surface of the second polyolefin layer opposite to the paper base has an Oken smoothness of 10,000 sec or less, wherein the Oken smoothness is measured in accordance with JIS P8155: 2010 using an Oken type air-permeability and smoothness tester.

3. The release sheet as recited in claim 1 or 2, wherein the highly smoothing process is a calender process using a mirrored roll.

4. The release sheet as recited in any one of claims 1 to 3, wherein polyolefin resin that constitutes each of the first polyolefin layer and the second polyolefin layer is a low density polyethylene.

5. The release sheet as recited in any one of claims 1 to 4, wherein:
the first polyolefin layer has a thickness (t1) of 10 to 50 µm;
the second polyolefin layer has a thickness (t2) of 10 to 50 µm; and
a ratio of the thickness (t1) of the first polyolefin layer to the thickness (t2) of the second polyolefin layer (t1/t2) is 0.5 to 2.0.

6. A pressure sensitive adhesive sheet comprising:
a base material;
a pressure sensitive adhesive layer configured of a silicone-based pressure sensitive adhesive; and
the release sheet as recited in any one of claims 1 to 5,
wherein the pressure sensitive adhesive layer is laminated directly on the surface of the first polyolefin layer in the release sheet opposite to the pigment coat layer.

7. The pressure sensitive adhesive sheet as recited in claim 6, wherein the silicone-based pressure sensitive adhesive comprises an addition reaction-type silicone pressure sensitive adhesive that contains an addition reaction-type silicone resin and a silicone resin, wherein the addition reaction-type silicone resin is obtainable from a first polydimethylsiloxane having at least two alkenyl groups in one molecule and a second polydimethylsiloxane having at least two hydrosilyl groups in one molecule.

8. The pressure sensitive adhesive sheet as recited in claim 7, wherein a compounding ratio of the silicone resin is 1 to 30 mass parts relative to 100 mass parts of the addition reaction-type silicone resin.

9. The pressure sensitive adhesive sheet as recited in any one of claims 6 to 8, wherein the pressure sensitive adhesive sheet is suitable for printing in a state of a pressure sensitive adhesive sheet having the release sheet.

10. The pressure sensitive adhesive sheet as recited in any one of claims 6 to 9, wherein the pressure sensitive adhesive sheet is suitable for sheet-fed processing in a state of a pressure sensitive adhesive sheet having the release sheet.

11. A method for manufacturing the pressure sensitive adhesive sheet as recited in any of claims 6 to 10, the method comprising:
coating one surface of the base material with a pressure sensitive adhesive material that is to constitute the pressure sensitive adhesive layer;
hardening the applied pressure sensitive adhesive material to form the pressure sensitive adhesive layer; and
laminating the release sheet and the pressure sensitive adhesive layer on each other so that the surface of the first polyolefin layer in the release sheet opposite to the pigment coat layer is in direct contact with the pressure sensitive adhesive layer.

## Patentansprüche

1. Trennfolie, die geeignet ist, um mit einer drucksensitiven Klebeschicht laminiert zu werden, die aus einem drucksensitiven Klebstoff auf Silikonbasis konfiguriert ist, wobei die Trennfolie geeignet ist, von der drucksensitiven Klebeschicht getrennt zu werden, wenn sie getrennt wird, wobei die Trennfolie Folgendes umfasst:
einen Papierträger;
eine Pigmentbeschichtungsschicht, die auf einer Seite des Papierträgers gebildet ist;
eine erste Polyolefinschicht, die auf einer Seite der Pigmentschicht gegenüber dem Papierträger gebildet ist; und
eine zweite Polyolefinschicht, die auf der anderen Seite des Papierträgers gebildet ist,
wobei eine Oberfläche der ersten Polyolefinschicht, die der Pigmentbeschichtungsschicht gegenüberliegt, einem hochglättenden Prozess unterzogen wird, sodass ein quadratischer Mittelwertgradient einer Rauigkeitskurve an der Oberfläche der ersten Polyolefinschicht gegenüber der Pigmentbeschichtungsschicht 0,014 µm oder weniger beträgt, wobei der quadratische Mittelwertgradient der Rauigkeitskurve mit einer Referenzlänge von 2,5 mm von einer Rauigkeitskurve eines Testtrennwerts von 2,5 mm gemäß ISO 4287:1997 unter Verwendung eines Oberflächenrauheitsmessgeräts gemessen wird,
und wobei die Oberfläche geeignet ist, um direkt auf die drucksensitive Klebeschicht laminiert zu werden.

2. Trennfolie nach Anspruch 1, wobei eine Oberfläche der zweiten Polyolefinschicht gegenüber dem Papierträger eine Oken-Glätte von 10.000 sec oder weniger aufweist, wobei die Oken-Glätte gemäß JIS P8155:2010 unter Verwendung eines Luftdurchlässigkeits- und Glätteprüfgeräts vom Typ Oken gemessen wird.

3. Trennfolie nach Anspruch 1 oder 2, wobei der hochglättende Prozess ein Kalanderprozess unter Verwendung einer verspiegelten Walze ist.

4. Trennfolie nach einem der Ansprüche 1 bis 3, wobei Polyolefinharz, das jeweils die erste Polyolefinschicht und die zweite Polyolefinschicht bildet, ein Polyethylen niedriger Dichte ist.

5. Trennfolie nach einem der Ansprüche 1 bis 4, wobei:
die erste Polyolefinschicht eine Stärke (t1) von 10 bis 50 µm aufweist;
die zweite Polyolefinschicht eine Stärke (t2) von 10 bis 50 µm aufweist; und
ein Verhältnis der Stärke (t1) der ersten Polyolefinschicht zur Stärke (t2) der zweiten Polyolefinschicht (t1/t2) 0,5 bis 2,0 ist.

6. Drucksensitive Klebefolie, umfassend:
ein Trägermaterial;
eine drucksensitive Klebeschicht, die aus einem drucksensitiven Klebstoff auf Silikonbasis besteht; und
die Trennfolie nach einem der Ansprüche 1 bis 5,
wobei die drucksensitive Klebeschicht direkt auf die Oberfläche der ersten Polyolefinschicht in der Trennfolie gegenüber der Pigmentbeschichtungsschicht laminiert ist.

7. Drucksensitive Klebefolie nach Anspruch 6, wobei der drucksensitive Klebstoff auf Silikonbasis einen drucksensitiven Additionsreaktion-Silikonkleber umfasst, der ein Additionsreaktion-Silikonharz und ein Silikonharz enthält, wobei das Additionsreaktion-Silikonharz aus einem ersten Polydimethylsiloxan mit mindestens zwei Alkenylgruppen in einem Molekül und einem zweiten Polydimethylsiloxan mit mindestens zwei Hydrosilylgruppen in einem Molekül erlangt werden kann.

8. Drucksensitive Klebefolie nach Anspruch 7, wobei ein Herstellungsverhältnis des Silikonharzes 1 bis 30 Massenteile bezogen auf 100 Massenteile des Additionsreaktion-Silikonharzes ist.

9. Drucksensitive Klebefolie nach einem der Ansprüche 6 bis 8, wobei die drucksensitive Klebefolie zum Bedrucken in einem Zustand einer drucksensitiven Klebefolie mit der Trennfolie geeignet ist.

10. Drucksensitive Klebefolie nach einem der Ansprüche 6 bis 9, wobei die drucksensitive Klebefolie für eine foliengespeisten Verarbeitung in einem Zustand einer drucksensitiven Klebefolie mit der Trennfolie geeignet ist.

11. Verfahren zur Herstellung der drucksensitiven Klebefolie, nach einem der Ansprüche 6 bis 10, wobei das Verfahren Folgendes umfasst:
Beschichten einer Oberfläche des Trägermaterials mit einem drucksensitiven Klebematerial, das die drucksensitive Klebeschicht bilden soll;
Härten des aufgebrachten drucksensitiven Klebematerials zum Bilden der drucksensitiven Klebeschicht; und
Laminieren der Trennfolie und der drucksensitiven Klebeschicht aufeinander, sodass die Oberfläche der ersten Polyolefinschicht in der Trennfolie gegenüber der Pigmentbeschichtungsschicht in direktem Kontakt mit der drucksensitiven Klebeschicht ist.

## Revendications

1. Feuille antiadhésive adaptée pour être stratifiée avec une couche adhésive sensible à la pression, constituée d'un adhésif sensible à la pression à base de silicone, où la feuille antiadhésive est adaptée pour être libérée de la couche adhésive sensible à la pression lorsqu'on la détache, où la feuille antiadhésive comprend :
une base en papier ;
une couche de revêtement avec un pigment formée sur un côté de la base en papier ;
une première couche de polyoléfine formée sur un côté de la couche de revêtement avec le pigment opposé à la base en papier ; et
une seconde couche de polyoléfine formée sur l'autre côté de la base en papier,
où une surface de la première couche de polyoléfine opposée à la couche de revêtement avec le pigment subit un procédé de lissage intense, de sorte que le gradient quadratique moyen de la courbe de rugosité à la surface de la première couche de polyoléfine opposée à la couche de revêtement avec le pigment est inférieur ou égal à 0,014 µm, où le gradient quadratique moyen de la courbe de rugosité est mesuré avec une longueur de référence de 2,5 mm à partir d'une courbe de rugosité d'une valeur de coupure de 2,5 mm conformément à la norme ISO 4287 : 1997 en utilisant un testeur de la rugosité de surface,
et où la surface est adaptée pour être stratifiée directement sur la couche adhésive sensible à la pression.

2. Feuille antiadhésive selon la revendication 1, où une surface de la seconde couche de polyoléfine opposée à la base en papier a un lissé Oken inférieur ou égal à 10 000 secondes, où le lissé Oken est mesuré conformément à la norme JIS P8155 : 2010 en utilisant un testeur de lissé et de perméabilité à l'air de type Oken.

3. Feuille antiadhésive selon la revendication 1 ou la revendication 2, où le procédé de lissage intense est un procédé de calandrage utilisant un cylindre poli miroir.

4. Feuille antiadhésive selon l'une quelconque des revendications 1 à 3, où la résine polyoléfine qui constitue chacune parmi la première couche de polyoléfine et la seconde couche de polyoléfine est un polyéthylène basse densité.

5. Feuille antiadhésive selon l'une quelconque des revendications 1 à 4, où :
la première couche de polyoléfine a une épaisseur (t1) de 10 à 50 µm ;
la seconde couche de polyoléfine a une épaisseur (t2) de 10 à 50 µm ; et
le rapport entre l'épaisseur (t1) de la première couche de polyoléfine et l'épaisseur (t2) de la seconde couche de polyoléfine (t1 / t2) se situe entre 0,5 et 2,0.

6. Feuille adhésive sensible à la pression comprenant :
un matériau de base ;
une couche adhésive sensible à la pression constituée d'un adhésif sensible à la pression à base de silicone ; et
la feuille antiadhésive selon l'une quelconque des revendications 1 à 5,
où la couche adhésive sensible à la pression est stratifiée directement sur la surface de la première couche de polyoléfine dans la feuille antiadhésive opposée à la couche de revêtement avec le pigment.

7. Feuille adhésive sensible à la pression selon la revendication 6, où l'adhésif sensible à la pression à base de silicone comprend un adhésif sensible à la pression en silicone de type par réaction d'addition qui contient une résine silicone de type par réaction d'addition et une résine silicone, où la résine silicone de type par réaction d'addition peut être obtenue à partir d'un premier polydiméthylsiloxane ayant au moins deux groupements alcényles dans une molécule et d'un second polydiméthylsiloxane ayant au moins deux groupements hydrosyliles dans une molécule.

8. Feuille adhésive sensible à la pression selon la revendication 7, où un rapport de mélange de la résine silicone est de 1 à 30 parties en poids relativement à 100 parties en poids de la résine silicone de type par réaction d'addition.

9. Feuille adhésive sensible à la pression selon l'une quelconque des revendications 6 à 8, où la feuille adhésive sensible à la pression est adaptée à l'impression dans une configuration de la feuille adhésive sensible à la pression ayant la feuille antiadhésive.

10. Feuille adhésive sensible à la pression selon l'une quelconque des revendications 6 à 9, où la feuille adhésive sensible à la pression est adaptée pour un traitement avec une alimentation par feuilles dans une configuration de la feuille adhésive sensible à la pression ayant la feuille antiadhésive.

11. Procédé destiné à la fabrication de la feuille adhésive sensible à la pression selon l'une quelconque des revendications 6 à 10, le procédé comprenant :
le revêtement d'une surface du matériau de base avec un matériau adhésif sensible à la pression qui doit constituer la couche adhésive sensible à la pression ;
le durcissement du matériau adhésif sensible à la pression appliqué pour former la couche adhésive sensible à la pression ; et
la stratification de la couche antiadhésive et de la couche adhésive sensible à la pression l'une sur l'autre pour que la surface de la première couche de polyoléfine dans la feuille antiadhésive opposée à la couche de revêtement avec un pigment soit en contact direct avec la couche adhésive sensible à la pression.
